# EUROPEAN PATENT APPLICATION

(11) **EP 2 500 314 A1**
(43) Date of publication of application: **19.09.2012**
(21) Application number: 11158053.6
(22) Date of filing: 14.03.2011
(51) Int. Cl.: B82Y 20/00, G02B 6/122, G01N 21/77

(54) **Photonic crystal sensor**

(71) Applicant: Nederlandse Organisatie voor Toegepast -Natuurwetenschappelijk Onderzoek TNO, 2628 VK Delft (NL)
(72) Inventor: Boersma, Arjen, 5237 KL's-Hertogenbosch (NL)
(74) Representative: Jansen, Cornelis Marinus

(57) **Abstract**

Optical sensor for detecting an analyte (4), the sensor comprising a photonic crystal, the photonic crystal comprising an analyte-sensitive polymeric material (1) which material is deformable by contact with said analyte (4), by which contact an optical property of the photonic crystal is altered or of which material (1) a refractive index is changed by contact with said analyte (4) and which analyte-sensitive material (1) forms part of a periodic structure (3,4) of the photonic crystal, the structure (3,4) having alternating zones of a relatively high refractive index and zones of a relatively low refractive index, which alternating zone are provided in one or two orthogonal directions of the analyte-sensitive material (1).

## Description

The present invention is directed to the field of chemistry, in particular the field of analytical chemistry and applied polymer chemistry. In particular the invention is directed to an optical sensor for detecting an analyte, a method for preparing such as detector, and to the use of such a sensor for detecting an analyte.

Sensors of which the sensing principle and optionally the data transfer make use of light may be referred to as optical sensors. In particular, these sensors may make use of infrared light, visible light or ultraviolet light. Optical sensors have a number of advantages over electronic detection systems. Optical sensors are for example more reliable in environments that are difficult to access and/or hazardous to humans, for instance environments such as those found in the oil and gas industry, and are usually not adversely affected by the electromagnetic radiation that is generally produced in for example power cable systems, induction furnaces or equipment for nuclear magnetic resonance measurements, such as MRI or NMR equipment.

Furthermore, with optical sensors interfere with (other) electromagnetic equipment or with biological systems (organisms) can be avoided, since no electronics need to be present at or close to the place where the sensor is used. For instance, light for detecting a change in the sensor can be directed to and from the sensor via a waveguide (or through the air), such that electronics which may be used for detection and/or data processing can be at a distance of the sensor, or at least in some embodiments a change in an optical property of a sensor can be noticed with the naked eye. Other advantages are the easy operation of optical sensors on large distances, their small size, their flexibility and/or the possibility to make a sensor system comprising an array of discrete sensors that all may be read separately from a single optical waveguide (a multiplexed sensor system).

Optical sensors for a chemical substance to be detected (i.e. the analyte) may comprise an analyte-sensitive material, which can respond to being contacted with the analyte in variety of ways. For instance, the contact may cause a change in colour, a change in fluorescent properties of the material, or a change in refractive index of the analyte-sensitive material or a change in optical path due to deformation of the analyte-sensitive material. A specific type of optical sensors makes use of a photonic crystal. Photonic crystals are periodic optical nanostructures that are designed to affect the motion of photons in a similar way that periodicity of a semiconductor crystal affects the motion of electrons.

WO 2007/008440 relates to a photonic crystal platform that is imprinted in a rigid polymer substrate. Subsequently, this nanostructure is covered with a protective coating. The receptors that determine the presence of the analytes are attached to the surface of the second coating. The change in refractive index of this layer (the responsive layer) causes a change in the light used for detecting the analyte. Only a small part of the light interacts with the responsive layer. The sensitivity and detection limit of this sensor is considered to be relatively low. Furthermore, this platform itself is not selective for specific analytes.

Xiaobin Hu (Adv mater 2007, 19, 4327-4332) relates to the manufacturing of photonic crystal structures from polymers and particles. When the polymer response to a specific analyte, the morphology of the photonic crystal changes. The polymers are not structured themselves, but act as matrix material for composite systems. Furthermore, these are 3D systems that are difficult to construct. Inverted opals are laborious to manufacture and are only feasible on a small scale and difficult to integrate into a multi chemical sensor platform.

However, a need remains for alternative optical sensors and methods of making optical sensors. In general, sensors that can serve as an alternative are important in analytical chemistry, as they can be used in a different method of analysis in order to validate results obtained by another method of analysis.

It is an object of the present invention to provide a novel optical sensor for detecting an analyte, that may serve as an alternative to known sensors.

It is a further object of the invention to provide a novel (nanostructured) sensor that is improved, in particular in that a detection system comprising the (nanostructured) sensor is improved in that it offers at least one of the following advantages: a higher selectivity towards a specific analyte, a larger dynamic range, a higher accuracy, a higher robustness, a lower detection limit, a higher sensitivity.

The selectivity of a detection system for measuring a certain environmental condition is the extent to which the detector specifically reacts to a change in a selected environmental condition, without being affected by a change in other conditions.

The dynamic range of a sensor system is the range of a changeable quantity that can be measured with that sensor system, the limits of which range are defined by the smallest and the largest value of the changeable quantity that can be measured with that sensor system.

The accuracy of a detection system is the closeness of a reading or indication of that detection system to the actual value of the quantity being measured.

Robustness is the extent to which a detection system is resistant to changes in the detection system, influences from a specific sample and influences from the environment other than the condition, other than the changes in the condition to be measured. Accordingly, as a system is more stable, the back ground noise will be less and/or fewer artefacts will occur in the measuring signal, such a spikes, base line drift and/or base line shifts.

The detection limit is the lowest measurable change in a environmental condition. It is determined by the signal to noise ratio. In general, the detection limit for a particular substance is set at a signal to noise ratio of 2 (if the noise is represented as peak to peak) or 4 (if the noise is represented as the root of the mean square noise (RMS noise)).

The sensitivity of a detection system is the smallest change in a environmental condition, such as a physical or chemical parameter, that can be detected by the detection system.

It is a further object to provide a novel method for preparing an optical sensor, in particular a method that allows relatively simple manufacture, that has a good reproducibility, that is relatively labour-extensive, that allows manufacturing at a relatively large scale and/or that allows relatively easy integration into a multi chemical sensor platform.

It has now been found that one or more of these objects are realised by providing a sensor respectively a method comprising (the manufacture of) a specific photonic crystal comprising an analyte-sensitive polymeric material.

Accordingly, the present invention relates to an optical sensor for detecting an analyte, the sensor comprising a photonic crystal, the photonic crystal comprising an analyte-sensitive polymeric material which material is deformable by contact with said analyte, by which contact an optical property of the photonic crystal is altered or of which material a refractive index is changed by contact with said analyte and, which analyte-sensitive material forms part of a periodic structure of the photonic crystal, the structure having alternating zones of a relatively high refractive index and zones of a relatively low refractive index (i.e. relative to each other), which alternating zone are provided in one, two or three orthogonal directions of the analyte-sensitive material.

Further, the invention relates to a method for preparing an optical sensor, comprising a photonic crystal, for detecting an analyte, the method comprising
- providing a stamp having a surface comprising a pattern for imprinting a periodic structure for the photonic crystal;
- providing an imprintable analyte-sensitive material for the photonic crystal
- imprinting the periodic structure into the imprintable material by pressing said surface of the stamp to a surface of the imprintable material;
- optionally, hardening the material in which the periodic structure has been imprinted;
by which imprinting and optional hardening the photonic crystal is provided, wherein the material of the photonic crystal in which the periodic structure has been imprinted, at least after hardening is deformable when contacted with said analyte, by which deformation of the material an optical property of the photonic crystal is altered, or wherein the refractive index of the material of the photonic crystal in which the periodic structure has been imprinted is changable by contact with said analyte .

Further, the invention relates to the use of an optical sensor (prepared by a method) according to the invention for detecting an analyte.

A sensor according to the invention may form part of a larger structure. Accordingly, the present invention further relates to an object comprising a photonic crystal sensor according to the invention, in particular an object selected from the group of infrastructural elements, such as dikes, dams, tunnels, aqueducts, bridges, roads; landfills, subterranean water, oil or gas reservoirs, high voltage power cables, induction furnaces, equipment for nuclear magnetic resonance measurements, such as MRI or NMR equipment, and equipment for (chemical) processing industry, such as reactors, pipelines, separation devices, storage containers, and the like. In a specific embodiment of the invention, the object is a is or comprises a microreactor in which the photonic crystal sensor is present in the reactor, preferably incorporated in the reactor housing.

A sensor (prepared) according to the invention is in particular suitable for detecting an analyte with a higher selectivity towards a specific analyte, a larger dynamic range, a higher accuracy, a higher robustness, a lower detection limit, or a higher sensitivity than a comparable sensor system, e.g. as described in the prior art cited herein above.

The sensor may be integrated into an existing optical sensor platform.

A sensor is particularly suitable to be provided as (part of) a miniaturised system, for instance a lab on a chip or a microreactor.

A sensor according to the invention is particularly suitable to be provided in the form of a sensor system comprising a plurality of sensors according to the invention. Herein different sensors of the system may be designed for detection of different analytes. Thus, the system may be used for simultaneous detection of a plurality of analytes.

In a specific embodiment, the sensor is provided to have a analyte sensitive material - which upon contact with the analyte — has a change of colour that is noticeable with the naked eye. This can be accomplished by including a chemical substance which in response to the presence of analyte causes a change in colour. Such so called colour indicators are generally known in the art for various analytes

A sensor of the invention is in particular suitable for detecting a gaseous or vaporous analyte or a liquid or dissolved analyte. For instance, one or more zones of a low refractive index (e.g. normally filled with air) may be filled with the liquid or gas/vapour which is then analysed for the presence of the analyte.

A sensor according to the invention is also particularly suitable for use under non-ambient conditions, in particular under conditions that may exist in underground oil or gas reservoirs, or in the equipment that is used to produce oil or gas from these reservoirs, or in process installations, or in water treatment installations. Advantageously, a (multiplexed) sensor system according to the invention can be used for detecting a water-oil or water-gas interface, for monitoring the displacement of such interfaces or for monitoring the conditions in the proximity of such interfaces. This can be done by using a waveguide, in optical connection with the photonic crystal.

Further, a sensor according to the invention can be used suitably for the detection of a biomolecule in medical applications, e.g. a sugar (glucose), a hormone (cortisol), a protein (antibodies or antigens) or a metabolic product (bilirubin) in a biological sample, in particular a bodily fluid. The sensor may be for *in vitro* use. However, since a sensor can be provided with small dimensions, in a specific embodiment the sensor is suitable for *in vivo* use (implanted or short-term inserted) or may be provided in a catheter or the like. Thus, in particular a biomolecule, for instance sugar, cortisol or bilirubin, may also be detected *in vivo* by a sensor according to the invention.

The invention allows manufacture of an optical sensor comprising a photonic crystal in a relatively simple way, in particular in a manner requiring few process steps

The term "or" as used herein is defined as "and/or" unless specified otherwise.

The term "a" or "an" as used herein is defined as "at least one" unless specified otherwise.

When referring to a noun *(e.g.* a compound, an additive, etc.) in the singular, the plural is meant to be included.

As used herein, a 'polymer' is a substance of which the molecules, in particular organic molecules, are built up at least conceptually from a plurality of monomeric units. The polymer of the coating is usually built up from at least 10 monomeric units, preferably at least 50 monomeric units, at least 100 monomeric units, or at least 250 monomeric units. The upper limit of the polymer is not particularly critical and can be, for instance, 1 000, 10 000, 50 000, or more than 50 000 monomeric units. The monomeric units may be the same (a homopolymer) or the polymer may be composed of two or more different monomers (a copolymer). A copolymer may be a random copolymer, a block copolymer, an alternating copolymer or a graft copolymer. A polymer may be branched or linear. A polymer may be cross-linked or uncrosslinked. When referring herein to a polymer of a certain type, e.g. a polyolefin, a polyimide, a polyvinylpyrrolidone (PVP), or a cellulose derivative, this is meant to include copolymers additionally comprising one or more polymeric segments of another type, e.g. when referring to PVP, copolymers of PVP and an other polymeric segment, e.g. a cellulose derivative, are meant to be included.

As will be understood by the skilled person, when referred herein to a photonic crystal, this does not mean that the material of which it is made actually needs to have a crystalline material structure. The photonic crystal may be amorphous, crystalline or a combination thereof, as long as it is capable of acting as a photonic crystal.
Figures 1a, 1b an 1c schematically show respectively a 1D, 2D and 3D periodic structure.
Figure 2 schematically shows a triangular lattice structure.

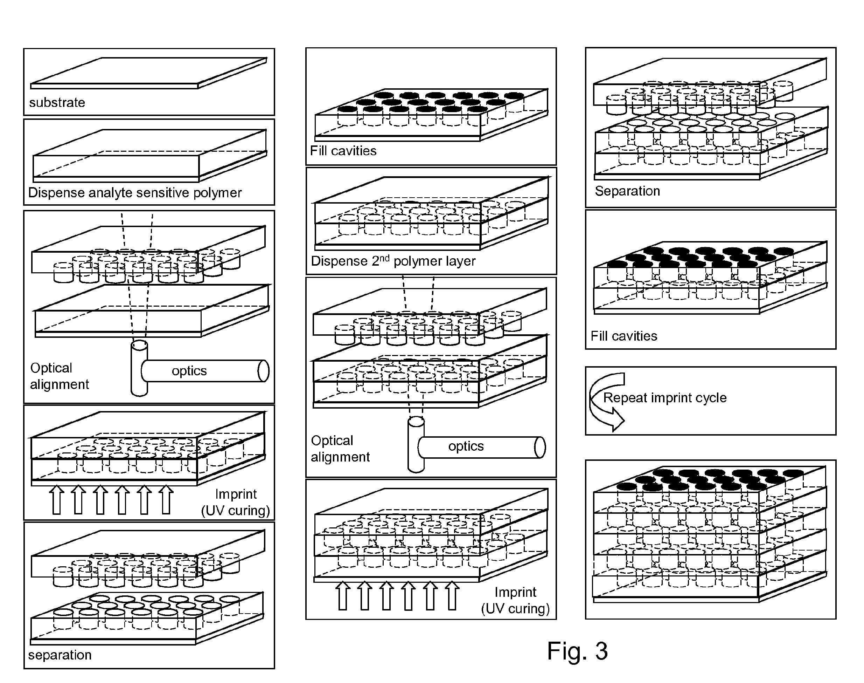

Figure 3 schematically shows a method for manufacturing a sensor according to the invention.
Figure 4 schematically shows two possible ways for optical measurement.
Figures 5.1 and 5.2 show results obtained with an acetone sensor according to the invention.
Figures 6.1 and 6.2 show results obtained with a toluene sensor according to the invention.

In a specific embodiment, the photonic crystal has a one dimensional (1D) periodic structure. Such structure typically is formed of alternating layers of at least two materials with different refractive indices resulting in a periodically varying refractive index in one direction. In a 1D periodic structure refractive index is generally homogeneous with respect to refractive index in the other two directions. A preferred 1D periodic structure is a grating structure, for instance a Fibre Bragg grating structure or a long period grating structure. Advantageously, a grating structure is provided in a waveguide, in particular an optical fibre, wherein the grating provides an analyte sensitive part of the waveguide, wherein an optical property is changed when the grating is contacted with an analyte. A sensor with a 1D periodic structure may for instance be based on sensors that are based on waveguide grating as described in detail in US 5 380 995, US 5 402 231, US 5 592 965, US 5 841 131, US 6 144 026, US 2005/0105841, US 7 038 190, US 2003/156287, WO 2010/074569, WO 2009/082213, or other documents referred to herein. Generally, 1D gratings are easier to manufacture than 2D and 3D photonic crystals. The required refractive index contrast between high and low refractive index parts to achieve a certain response signal from a certain input signal is smaller. An advantage of 2D and of 3D over 1D photonic crystals, respectively of 3D over 1D and 2D photonic crystals is the fact that the sensor functionality can be applied from more than one direction, making the interrogation easier.

It is generally desired for a sensor according to the invention, that the sensor shows photonic band-gap behaviour at at least one wavelength, which wavelength is preferably used for detection purposes during use of the sensor. This is in particular desired if a difference in refractive index is the optical property that is changed upon contact with the analyte.

In a specific embodiment, the photonic crystal has a two dimensional (2D) periodic structure. Refractive index variation is present in two directions while there is no variation in the third. Such structure may for example by provided by a material wherein (cylindrical) holes or provided which is (at least conceptually formed of stacked cylinders (wherein in practice the cylinders do not have to touch), wherein the interstitial space between cylinders is of a material having a different refractive index than the cylinders or wherein the interstitial space is filled with air or another gas, or with a liquid.

In a preferred 2D optical sensor according, the periodic structure has a triangular lattice structure or a square lattice structure. A triangular lattice structure is particularly preferred for providing a good sensor response also if the refractive index difference between two alternating zones is relatively small.

For a square lattice photonic band-gap behaviour at at least one wavelength is generally achieved with a ratio refractive index of the zone with relatively high refractive index to the refractive index of the zone with the relatively low refractive index of 1.72:1 or more. For a triangular lattice such behaviour is generally already reached at a lower ratio, namely at a ratio of 1.5:1 or more

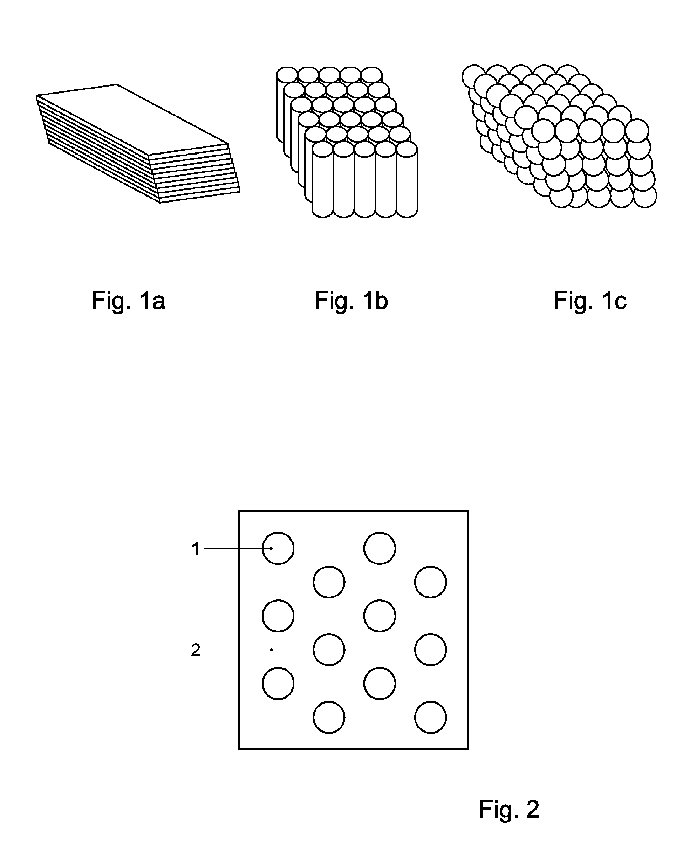

Also, it is contemplated that the triangular lattice structure contributes to the robustness of the sensor. A schematic example of a triangular lattice structure is shown in Figure 2 (top view). The circles represent round cylinders (1) or other cylinders. The cylinders may be zones having a high refractive index or zones having a low refractive index. In an embodiment wherein air or another low-refractive index gas or provides the low-refractive index zone(s) or wherein a liquid is used for one of the zones, the gas or liquid is preferably provided in the cylinders and the analyte-sensitive materials is present in the surrounding zone(s) (2). This is advantageous for improved robustness of the sensor.

Accordingly, in a preferred embodiment, the analyte-sensitive material has a relatively high refractive index and surrounds zones with a relatively low refractive index, which zones with a relatively low refractive index preferably are formed by air or another gas.

It is also possible to fill the zones with a low refractive index fully or partially with a liquid, which liquid is suspected to contain the analyte (e.g. glucose). The optical response can be measured when the liquid is present, or after drying of the sensor, wherein the low index zones are filled with gas again. In such embodiment, care is taken that the drying conditions are such that the analyte does not or at least not substantially evaporate (*e*.*g*. by drying under conditions at which the analyte is solid, or by providing the sensor with an agent to which the analyte binds, e.g. an adsorbent, a complexing agent or an antibody.

A triangular lattice structure may be equilateral or isocles.

In a three-dimensional (3D) periodic structure the refractive index is varied in all three directions of space. An example of a 3D structure is shown in Figure 1c, where the structure is formed by a stack of spheres. The interstitial space is as described for the 2D structure.

Figure 2 shows the fabrication of a first a 2D periodic structure upon which one or more further 2D structures are stacked in an analogous manner, thereby forming a 3D periodic structure.

Suitable parameters of the photonic crystal, in particular periodicity, lattice constant, and ratio of refractive index for the alternating zones of a relatively high refractive index and zones of a relatively low refractive index can be determined based on common general knowledge, CrystalWave simulation software (supplied by Photon Design Ltd), the information disclosed herein and optionally a limited amount of testing.

Usually, the ratio of refractive index for the alternating zones is at least 1.3, preferably 1.5 or more, in particular 1.6 or more, more in particular 1.72 or more, or at 2.0 or more. Usually, said ratio is 5 or less. In particular, said ratio may be 4 or less, 3 or less, 2.5 or less, 2.0 or less or 1.8 or less. A polymer containing aromatic moieties is in particular suitable to provide a zone with a relatively high refractive index, which results in a high refractive index contrast with, e.g. the surrounding air.

If desired, a part of the surface of the periodic structures are arranged to reflect, transmit or diffract incident light during use of the sensor, and comprises a coating having a higher refractive index than the analyte-sensitive material, which coating preferably is present on parts of the surface essentially parallel to the periodic structure of the photonic crystal. This is in particular advantageous to enhance the manufacturability and sensor performance, such as with respect to robustness and/or ease of interrogation if the ratio of refractive index for the alternating zones is relatively low. Examples of such materials are, dependent on the refractive index of the analyte-sensitive material, transparent TiO₂, ZnO, ZrO₂, ZnS and ZnTe. Alternatively or in addition, a metallic coating can be present. Such coatings may however have a low or no measurable permeability to an analyte of interest. Therefore, generally parts of the surface should generally be left free of such a coating, unless the coating is permeable to the analyte of interest, in which case the coating may enhance selectivity.

However, in accordance with the invention a satisfactory sensor is thought to be provided that is free of such coating. Such embodiment is advantageous in that it may be more sensitive due to increase surface area that is fee to be contacted with analyte. Also such sensor is generally more simple to manufacture.

The periodic structure usually has a periodicity in the range of 100-1500 nm , preferably the periodicity is 100 nm or less, in particular 500 nm or less. Preferably, the periodicity is at least 150 nm, in particular at least 200 nm. To some extent, the preference depends on the wavelength of the light with which the sensor is intended to be read. As a rule of thumb, the higher the wavelength, the higher the periodicity may be for optimal results. For example, for a wavelength of about 1550 nm a periodicity of about 500 nm is particularly suitable, for visible light a periodicity of 150-250 nm is particularly suitable. The reflected wavelength can be estimated according to : λ=2.n.d. (n= refractive index, d is periodicity)

The analyte sensitive material may in principle be of any material that is deformable or of which the refractive index is changeable by contact with said analyte, by which contact an optical property of the photonic crystal is altered or of which material a refractive index is changed by contact with said analyte.

In a preferred embodiment, the optical property changed by contacting with the analyte is a change in refractive index of the material.

In a preferred embodiment, wherein the material in which the periodic structure has been imprinted, is deformable by contacting it with the analyte in that it swells or shrinks when contacted with the analyte.

In particular, an analyte-sensitive material may be used that is sensitive to an analyte selected from the group of formaldehyde and other aldehydes; amines; dihydrogen sulphide, carbon disulphide and other sulphides; glucose, cortisol, bilirubin, and other biomolecules; carbon dioxide; carbon monoxide;, oxygen; carbon dioxide; hydrogen cyanide; ammonia; methane and other hydrocarbons, including aromatic hydrocarbons; methanol, ethanol and other alcohols; ionic species, including metal ions, metal-containing ions, H⁺, and hydroxyl ions; solvents; surfactants; and salts. The material may in particular be based on material known in the art. In particular, the analyte-sensitive material may be provided, based on the description herein below.

In a preferred embodiment, the photonic crystal at least substantially consists of one or more analyte-sensitive materials, in particular one or more one or more analyte-sensitive polymers. Thus, during use, the analyte-sensitive material(s)/polymer(s) can interact with a high fraction of the light passed through the photonic crystal, as opposed to a photonic crystal wherein analyte-sensitive material is applied as a coating on a photonic crystal structure of a material that solely acts as a waveguide and a support for the analyte-sensitive material, or as opposed to an embodiment wherein a analyte-sensitive material (characteristically a minor amount of total solids) is dispersed in a matrix material that only serves as a waveguide for the light and a matrix for the analyte-sensitive material. This is particularly preferred for further enhanced sensitivity and/or lower detection limit. In a particularly preferred embodiment, the photonic crystal at least substantially consisting of analyte-sensitive material (analyte-sensitive polymer) comprises more than 50 vol% to 100 vol % of analyte-sensitive materials (based on total solid content) in particular analyte-sensitive polymer, more preferably at least 75 vol%, in particular at least 90 vol %, at least 95 vol %, or at least 99 vol % of analyte-sensitive material or polymer (at 25 °C, in absence of analyte or liquids in the presence of which the material/polymer would shrink or swell).. In addition, such photonic crystal or another photonic crystal according to the invention may in particular comprise one or more coatings, covering at least part of a surface of the photonic crystal. Such coatings may in particular be selected from protective coatings, coating having a yet higher refractive index than the zones of relatively high refractive index, and semi-permeable coatings that are more permeable to an analyte of interest compared to one or more other substances that may be present in a sample or other environment wherein the analyte is to be detected. In addition, one or more additives may be present, in particular one or more additives selected from the group of plasticisers, fillers, analyte-adsorbents, and other additives commonly used for the specific type of material, provided that the material maintains sufficient transparency. Further details on some additives or coatings that may advantageously be present will given herein below.

In terms of weight percentages, the photonic crystal is preferably formed for 50-100 wt. % (based on total solids analyte sensitive material (polymer), in particular for at least 75 wt. %, more in particular for at least 90 wt. %, at least 95 wt. %, or at least 99 wt. %.

In particular, the analyte sensitive material may be selected from the group of polymeric materials.

Next specific embodiments wherein polymers are described suitable for specific analytes.

For instance, for a sensor system for detecting water (vaporous or liquid) the analyte sensitive material may comprise a polymer selected from the group of polyethylene imine (PEI), e.g. described in US application 2005/0105841; polyimide; hydrophilic cellulose derivatives, e.g cellulose acetate or a carboxyalkyl cellulose (such as carboxymethylcellulose or carboxyethyl cellulose); polyvinylpyrrlidone (PVP), including hydrophilic derivatives thereof; polyacrylic acid, including hydrophilic derivatives thereof, *e.g.* acrylic acid-acryl amide copolymers, such as described in EP-A 677 738; polyvinylalcohol (PVA).

A polyacrylic acid derivative or PVP derivative, such as described in EP-A 677 738, may also be used for a H⁺ sensor or for detecting a salt.

Further for a sensor system for detecting a salt, such as NaCl, use may be made of a polyacrylamide hydrogel, *e.g.* based on a coating as described in Sensors and Actuators B 87 (2002) 487-490.

An analyte-sensitive material comprising polyvinylpyridine, polyvinyl chloride (PVC) or polymethylmethacrylate (PMMA) may for instance be useful for a sensor for detecting an alcohol, an alkane or an aromate, in particular an alcohol or alkane having 1-12 carbon atoms, for instance methanol, ethanol, or methane or toluene.

In particular, the analyte-sensitive material may comprise an analyte-sensitive polymer selected from the group of
- polyacrylates
- polymers comprising a chain in which chain are present an aromatic group and a chemical group selected from the group of sulfonyl groups, carbonyl groups, carbonate groups, siloxane groups, oxygen and/or nitrogen containing heterocycle groups, such as pyridine, imidazole, oxadiazole or triazole groups, organofluorine groups, imide and amide groups;
- polymers comprising an aliphatic chain, which aliphatic chain is provided with functional, preferably polar, side-chains comprising at least one moiety selected from the group of heterocycloalkyl moieties, heterocycloaromatic moieties,
- polymers comprising crosslinks selected from the group of amide group crosslinks, ester group crosslinks, complexed metal ion crosslinks, saccharide-based crosslinks, Diels-Alder-based crosslinks, acrylate crosslinks, diazidostilbene-based crosslinks and diperoxide-based crosslinks.
- Molecular Imprinted Polymer structures, in particular made from one or more polymers selected from the groups mentioned above. that are used

Molecular Imprinted Polymer structures can be made by synthesing, crosslinking or otherwise forming the polymer structure in the presence of a specific analyte of interest and thereafter removing the analyte, *e.g.* by washing, thus creating cavities in which the analyte will fit again during sensing.

A Molecular Imprinted Polymer structure is specifically preferred for a sensor for detecting a relatively large molecule.

In particular, a Molecular Imprinted Polymer structure is suitable for a sensor for detecting an analyte with a molecular weight of about 100 g/mol or more, more in particular of about 150 g/mol or more. The molecular weight may be 1 000 000 or higher, in particular for polymeric analytes. Usually, the molecular weight is less 1 000 000 g/mol, in particular 100 000 g/mol or less, more in particular 10 000 g/mol or less or 1000 g/mol or less.

A Molecular Imprinted Polymer structure is specifically preferred for a sensor for detecting an analyte selected from the group of sugars (*e.g.* glucose), hormones (*e.g.* cortisol) , proteins, drugs and other molecules of a similar or larger size. Relatively large metabolic products, such as bilirubin are preferred examples of such other molecules.

Preferred polymers for the detection of small molecules, in particular gaseous molecules and small liquid molecules, such as formaldehyde, hydrogen sulphide, carbon dioxide, water (vapour), ammonia can be found in polymers comprising a flexible chain with functional (polar) side chains. Further details about such polymers can be found herein below and in cited references.

In principle, at least in some applications, it is not necessary that the analyte-sensitive material is highly selective to one analyte of interest. This is in particular the case, if the sensor is to be used in a well-defined area with no or low levels of potentially interfering substance. Also, it is possible to provide the sensor with a semi-permeable coating that only has significant (measurable) permeability to the analyte of interest and not to a potentially disturbing other chemical substance that may be present in a sample or other environment, which is to be analysed for the presence of an analyte. Also, it is possible to include the sensor in a housing which is selectively permeable to the analyte of interest. For instance, a hydrophilic outer coating may be used to at least substantially prevent a hydrophobic substance (*e.g.* an alkane) to interfere with an analyte-sensitive material intended to detect the presence of water in an environment. Examples of semi-permeable materials are known in the art. Also an embodiment wherein use is made of a semi-permeable material may be based on the yet to be published European Application No. 10167056.0, of which the contents are incorporated herein by reference, in particular the parts directed to the semi-permeable materials, more in particular page 22, line 27 to page 25, line 12.

However a further improvement of the sensor, in particular with respect to selectivity, may be achieved by providing an analyte-sensitive material with a relatively high selectivity towards an analyte of interest, in particular compared to one or more chemical substances that are expected to be potentially present in the environment. This may be accomplished by providing the analyte-sensitive material, preferably a polymer, with functional groups capable of interacting with an analyte of interest.

In a preferred embodiment such material, more preferably a polymer, is selected from the group of polymers comprising an aliphatic chain, which aliphatic chain is provided with functional, side-chains comprising at least one moiety capable of interacting with the analyte of interest. The presence of such group may in particular provide one or more of the following improvements: improved selectivity, improved sensitivity, improved dynamic range, improved limit of detection.

Further, such polymer can reversibly absorb an analyte of interest in order to perform a continuous measurement of the presence of the analyte. With a continuous measurement is meant a measurement in a non-cumulative way. For example, in a continuous measurement it is possible to measure fluctuations of an environmental effect, such as fluctuations in the concentration of a certain chemical. This is in contrast to a cumulative way of measuring, wherein the total amount of the chemical is observed (like in a dosimeter), i.e. only one or more increases can be observed.

Such polymers with a functional side-chain are described in detail in WO 2009/082213, of which the contents are incorporated herein by reference, in particular with respect to the description of the analyte-sensitive polymers described therein, especially the passages from page 8, line 5 to page 11, line 5, the methodology of applying the layer from page 11, line 29 to page 13, line 9 and Examples 1-5.

Preferred polymers with an aliphatic chain are polymers composed of at least one monomer selected from the group of acryloylmorpholine, acrylic acid, acrylamide, and vinyl pyrrolidone.

The functional groups are typically chosen dependent on the nature of the analyte of interest. For instance, a side-chains comprising a Lewis and/or Brønsted acid functional group and/or a Lewis and/or Brønsted base functional group is particularly suitable for a sensor that can be used to measure H⁺ or the presence of water. Thus, such sensor may be used as a pH sensor or moisture sensor.

A carboxylic acid moiety or an amine moiety may be used to provide a waveguide for use in an H⁺ sensor, for use in an ammonia sensor, or for use in an acid (*e.g.* HCl) sensor.

A functional group that is capable of forming a complex or another bond with an ion, in particular a metal ion or an ionic compound containing a metal ion may be present, for instance side-chains may comprise a carboxylic acid group, *e.g.* for detecting an alkaline earth metal ion, such as Ca²⁺ or Ba²⁺.

In particular for detecting transition metal ions specific ligands are known in the art, e.g. from Dictionary of Inorganic Compounds, Chapman & Hall, London, first edition 1992. Examples of ligands that can be attached to the polymer as (part of) a side-chain are cyclopentadienyl, cyclooctadiene, triamines, diamines, acetonitrile/benzonitrile, salen, porphyrin, triphenyl phosphine, tetramethyldiamine, trimethoxyphosphine, bipyridine, imidazole, terpyridine and phenantroline. The use of such functional groups is particularly suitable for a sensor that measures the presence of one or more types of metal ions as an analyte via their complexation to the specific ligands.

In particular advantageous is a sensor , of which said analyte-sensitive material comprises functional (polar) side chains.

Suitable side-chains in particular include moieties selected from the group consisting of heterocycloalkyl moieties, heteroaromatic moieties, -Rₙ-OH, -Rₙ-CN, -Rₙ-NH₂, -Rₙ-NO₂, -Rₙ-COOH, -Rₙ-(CO)(NH₂)-, -Rₙ-(CO)(NHR')-, -Rₙ-(CO)(NR'R")-, -Rₙ-NHR' and Rₙ-NR'R". In these moieties, each R, R' and R" independently represents a hydrocarbon moiety, which may be substituted or unsubstituted. The hydrocarbon moiety optionally comprises one or more heteroatoms. In particular, R, R' and/or R" may comprise 1-20, 1-12 or 1-6 carbons. More in particular, R, R' and/or R" may comprise a substituted or unsubstituted C1-C4 alkyl. R' and R" may together form a cyclic structure such as a heterocycloalkyl moiety. The integer n is 1 or 0. Crown ethers are examples of heterocycloalkyl moieties. In a specific embodiment, the heterocycloalkyl moiety is selected from the group of morpholine moieties, pyrrolidone moieties, oxazolidine moieties, piperidine moieties, tetrahydrofuran moieties, tetrahydropyran moieties, piperazine moieties and dioxane moieties. Particularly preferred are morpholine moieties and pyrrolidone moieties. The use of such functional groups is particularly suitable for a sensor that can be used to measure the presence of water.

Preferred heteroaromatic moieties include furan, ozazole, oxadiazole, pyrrole, pyran, pyridine, pyrazine, imidazole, thiozole, pyrimidine. , A (co)polymer of bis(aminophenyl)oxadiozole is in particular suitable for a sensor polymer for detecting hydrogen sulphide and/or carbon dioxide.

In a further preferred embodiment, said analyte-sensitive material comprises a polymer comprising a chain, in which chain are present an aromatic group and a chemical group selected from the group of sulfonyl groups, carbonyl groups, carbonate groups, siloxane groups, pyridine groups, triazole, imidazole or oxadiazalo groups, organofluorine groups, imide groups, oxygen groups and amide groups. Preferably a chemical group is present selected from the group of sulfonyl groups, carbonyl groups, carbonate groups, siloxane groups, pyridine groups, organofluorine groups, and amide groups. In a particularly preferred embodiment the chain further comprises imide groups and/or oxygen groups.

Such polymers are in described in detail WO/2010/074569, of which the contents are incorporated herein by reference, in particular with respect to the description of the analyte-sensitive coating described therein that may serve as an analyte-sensitive material for a sensor according to the present invention, especially the passages from page 6, line 30 to page 11, line 13 (describing the polymers in detail), and page 15, line 3 to 18, line 2 (describing particles that may be present in the analyte-sensitive coating) and the examples.

Such polymer is in particular advantageous in that it is also particularly suitable for detecting an analyte under extreme conditions, *e.g.* in a hot or highly pressurised environment, *e.g.* in a subterranean gas, oil or water reservoir in a highly reliable manner. Further, such polymer can reversibly absorb an analyte of interest in order to perform a continuous measurement of the presence of the analyte. *E*.*g*. in the field of oil exploration and in the field of gas exploration, it is highly preferred to monitor the downhole environment for a long period of time without replacing the sensor system. In such applications, it is advantageous to use a sensor according to the invention, because such a system can perform continuous measurements and has a high resistance against the conditions that may be present in downhole environments such as oil wells or gas wells, or in other extreme environments, *e.g.* in chemical processes at elevated temperature and/or pressure. In a specific embodiment, the sensor is used for detecting a water-oil or water-gas interface, for monitoring the displacement of such interfaces or for monitoring the conditions in the proximity of such interfaces. This can be done by using a waveguide of which the coating is capable of interaction with a component of the water phase (*e.g.* water, NaCl) or a component of the oil/gas phase (*e.g.* H₂S, CH₄, solvent). The interface may in particular be monitored in (underground) an oil/gas reservoir.

A preferred aromatic group of said polymer comprising a chain in which are present an aromatic group and a chemical group selected from the group of sulfonyl groups, carbonyl groups, carbonate groups, siloxane groups, pyridine groups, organofluorine groups and amide groups is a phenyl group, preferably a *p*-phenylene group. The phenyl group may comprise substituents. Other preferred aromatic groups are selected from the group of naphthalene groups.

In a preferred embodiment, the sulfonyl groups, carbonyl groups, carbonate groups, imide groups, siloxane groups, pyridine groups respectively amide groups are directly attached to the aromatic group. Thus, a preferred polymer molecule may comprise the following structure: -[Ar-X-]ₙ. Herein 'n' is an integer representing the number of monomeric units. 'Ar' represents the aromatic group, each X independently comprises a group selected from sulfonyl groups, carbonyl groups, carbonate groups, imide groups, siloxane groups, pyridine groups and amide groups, with the proviso that at least one of the X's represents a sulfonyl group, a carbonyl group, a carbonate group, a siloxane group, a pyridine group or an amide group.

In a further embodiment, at least one X represents a organofluorine group. Organofluorine groups (also known as fluoro carbons) are groups comprising carbon, fluorine and optionally one or more other groups, in particular one or more hydrogen atoms. In particular, the organofluorine may be represented by the formula-CₘFₖHₗ- , wherein m is an integer, e.g. in the range of 1-10, in particular in the range of 2-6. As generally known in chemistry ,the values for k and l depend on the value for m and the number of unsaturated carbon carbon bonds. The integer k is in the range of 1 to 2m, the integer l is in the range of 0 to 2m-1, with the proviso that the sum of k and l is 2m (if no unsaturated bonds are present) or less (if one or more unsaturated bonds are present). In particular the -CₘFₖHₗ- group may be a hydrofluoroalkyl or a perfluoroalkyl. In case of a hydrofluoroalkyl the sum of k+l equals 2m and k and l are both at least 1. In case of a perfluoroalkyl k equals 2m and l is 0. A preferred perfluoroalkyl is hexafluoroisopropyl. The number of fluorine atoms in a organofluorine is preferably equal to or higher than the number of hydrogen atoms, for improved interaction with an analyte, such as CO₂. Two aromatic groups in the polymer chain can also be separated by an oxygen molecule. Thus, a preferred polymer may comprise the following structure: - [Ar-O-Ar-X-]ₙ, wherein X and n are as identified above. Two aromatic groups in the polymer chain can also be separated by an analyte specific group (*i.e.* group capable of selectively interacting with an analyte of interest, thereby causing a change in the polymer material), such as hexafluoroisopropyl, another alkyl comprising fluorine groups, or isopropyl, siloxane or pyridine, triazole, imidazole or oxadiazalo groups,. Thus, a preferred polymer may comprise the following structure: -[Ar-C(CF₃)₂-Ar-X-]ₙ, wherein X and n are as identified above.

In a preferred embodiment, the polymer is selected from the group of polysulfones comprising aromatic groups in the chain and polycarbonates comprising aromatic groups in the chain. Any of these may in particular be used for a sensor for detecting H₂S. In a specific embodiment, the polymer also comprises imide groups in the chain or the polymer is a blend of a polymer comprising at least one polymer selected from the group of polysulfones comprising aromatic groups in the chain and polycarbonates comprising aromatic groups in the chain and further comprising a polymer comprising imide groups and aromatic groups in the chain. Such an embodiment is in particular preferred for a high sensitivity and/or a high temperature resistance.

In particular, the polysulfone may be selected from the group of poly (diphenyl sulfones). Preferred polysulfones are poly(oxy-1,4-phenylenesulfonyl-1,4-phenyleneoxy-1,4-phenyleneisopropylidene-1,4-phenylene) and poly(oxy-1,4-phenylenesulfonyl-1,4-phenylene). Other sulfones are sulfone imides and sulfone imide-amide, such as poly(4,4'-(sulfonylbis(4,1-phenyleneoxy)) dianiline-co-4,4'-(hexafluoro-isopropylidene) diphthalic anhydride).

In particular, the polycarbonate may be selected from the group of poly (diphenyl carbonates). Preferred polycarbonates are poly(oxycarbonyloxy-1,4-phenyleneisopropylidene-1,4-phenylene) and poly(oxycarbonyloxy-1,4-phenylenehexafluoroisopropylidene-1,4-phenylene).

In particular, the polyimide may be selected from the group of aromatic fluorocarbon polyimides, aromatic sulfone imides, aromatic heterocyclic imides or siloxane imides. A preferred polyimide is poly(4,4'-(sulfonylbis(4,1-phenyleneoxy)) dianiline-co-4,4'-(hexafluoro-isopropylidene) diphthalic anhydride).

A preferred polyamide is poly(trimellitic anhydride chloride-co-4,4'-diaminodiphenylsulfone).

The siloxane may in particular be a silsesquioxane or dialkylsiloxane, or a diarylsiloxane, which alkyl may comprise one or more substituents, e.g. on ore more fluorine atoms. A preferred siloxane is dimethylsiloxane. The siloxane may advantageously be present in a detection system for CO₂ or hydrocarbons

A preferred polysiloxane polymer for the analyte-sensitive material is polydimethyl siloxane, preferably poly (1,3-bis(3-aminopropyl) tetramethyldisiloxane- co- 4,4'-(hexafluoro-isopropylidene) diphthalic anhydride).

For H₂S detection, poly(4,4'-(sulfonylbis(4,1-phenyleneoxy)) dianiline-co-4,4'-(hexafluoro-isopropylidene) diphthalic anhydride) and poly(oxy-1,4-phenylenesulfonyl-1,4-phenyleneoxy-1,4-phenyleneisopropylidene-1,4-phenylene) are particularly suitable.

If desired, the selectivity of the analyte-sensitive material for a specific analyte may be enhanced by including one or more functional groups that are capable of specifically interacting with the analyte to be detected. Such functional group having affinity for a specific analyte may be included in the chain, or be pendant from the chain. For example, the polymer may comprise nitrogen containing side-chains, in particular for an increase in interaction with hydrogen sulfide. The polymer may comprise halogenated alkyl moieties, e.g. hexafluoro propyl groups, which may in particular be present in the chain. Such groups increase interaction with polar analytes and may in particular increase the dynamic range and/or the sensitivity.

In yet a further preferred embodiment, the analyte sensitive material comprises a polymer having internal stress, which polymer is capable of at least partially relaxing under the influence of the environmental effect; In a specific embodiment, the polymer having internal stress comprises crosslinks, which crosslinks are adapted to be cleaved under the influence of the environmental effect; such cross-links may in particular be selected from the group of amide group cross-links, ester group cross-links, complexed metal ion cross-links, saccharide-based crosslinks, Diels-Alder-based cross-links, diazidostilbene-based cross-links and diperoxide-based cross-links. Further details can be obtained from WO 2009/084954, of which the contents are incorporated by reference, in particular the passages relating to the nature of the polymer, and especially page 6, line 21 to page 7, line 11, page 8, line 15 to page 11, line 23.

A polymer of the analyte-sensitive material may comprise crosslinks. A typical crosslinking degree is 1 to 50 crosslinks per 100 monomer units. The polymeric chains may be crosslinked reacting the polymer with a crosslinker, for example 1 to 30 w% of crosslinker, based on the total weight of the polymer before crosslinking.

Preferred examples of crosslinkers are polyfunctional epoxides and polyfunctional peroxides or radical forming moieties, epichlorohydrine. Polyimides can be crosslinked by polyfunctional amines.

It is also possible to prepare a crosslinked polymer by polymerising a monomer mixture comprising at least one monomer for forming the aliphatic chain and at least one multifunctional monomer for forming the crosslinks. The concentration of multifunctional monomer, may for instance by chosen in the range of 1 to 30 w% based on total monomers. Preferred examples of crosslinkers are polyfunctional aromatic urethane (meth)acrylates and polyfunctional alkylene glycol (meth)acrylates and aliphatic di(meth)acrylates.

If desired, the analyte-sensitive material may comprise a material that changes colour and/or refractive index due to the influence of an analyte. Such materials may for example be selected from the group of chromic substances, which are known *per se, e.g.* halochromic substances for an H⁺ sensor or metallochromic substances for a metal ion sensor. Examples are porphyrines (*e.g.* for an Fe²⁺ sensor) and phtalocyanines (*e.g.* for copper ions).

In an advantageous embodiment, the analyte-sensitive material includes particles, in particular nanoparticles, that are capable of absorbing an analyte of interest (*i.e.* absorbent particles) partially or fully embedded in a matrix polymer, which may be a polymer material that is capable of deforming the waveguide, *e.g.* a polymer as described above. It is contemplated that the particles swell upon absorption, which results in deformation of the coating, in an increase of axial strain in the waveguide, and ultimately in a change in the spectral response of the electromagnetic radiation that is sent through the waveguide.

Advantageously said particles are elastomeric particles. Typically, such (nano)particles that are capable of absorbing an analyte of interest are made of a material that has a low stiffness (*e.g.* E-modulus < 100 MPa) and/or a low glass transition temperature (*e.g.* T_{g} < 50 °C) (compared to the matrix polymer. The T_{g} as used herein is the T_{g} as determined from the second heating curve obtained by Differential Scanning Calorimetry (DSC) using a heating rate and a cooling rate of 10 °C/min (10 mg of sample under a nitrogen atmosphere).

In an advantageous embodiment, selectivity of the analyte-sensitive material for a specific analyte is enhanced by the introduction of (polymer) (nano)particles that are capable of selectively absorbing the analyte. In this case, a high extent of absorption of the analyte in the nanoparticles is combined with a high diffusion speed (mobility) of the analyte in the analyte-sensitive material.

In a particularly advantageous embodiment the particles, which may be nanoparticles, comprise a copolymer of a polyether and polyamide (*e.g.* Pebax polymers, for instance as available from Arkema) or a fluorocarbon composition (*e.g.* fluoroalkyl(meth)acrylates, PTFE, FEP, PFA, MFA, *etc.).* Such particles may in particular be suitable for use in the detection of H₂S.

In a further advantageous embodiment, the analyte-sensitive material comprises particles, preferably nanoparticles, selected from the group of metal-organic frameworks (MOF's) particles. MOF's, also called "hybrid crystallised solids", are coordination compounds with a hybrid inorganic-organic framework comprising metal ions or semi-metal ions and organic ligands coordinated to the metal ions. These materials are organised as mono-, bi- or tri- dimensional networks wherein the metal clusters are linked to each other by spacer ligands in a periodic way. These materials generally have a crystalline structure and are usually porous. MOF's are in particular suitable for their good adsorption properties with respect to a gaseous analyte, for instance H₂, a hydrocarbon gas (such asCH₄) or CO₂.

The metal or semi-metal ions generally have a valence of at least +2. Common ligands include the conjugated bases of organic acids, such as bidentate carboxylates (*e.g.* oxalate, malonate, succinate, glutarate, phtalate, isophtalate, terephtalate), tridentate carboxylates (*e.g.* citrate, trimesate).

Suitable MOF's have been described in WO 2009/130251 of which the contents are incorporated by reference, in particular with respect to MOFs represented by the formula MₙOₖXᵢLₚ , at page 2 line to page 5, line 19. These MOF's may in particular be used for a sensor for detecting a sulphur containing compound.

Alternatively or additionally, inorganic/ceramic nanoparticles can be introduced, such as clays, that may absorb the analyte and swell. If present, the amount of particles in the analyte-sensitive material, is usually in the range of 0.1-10 vol%, preferably in the range of 1-5 vol%.

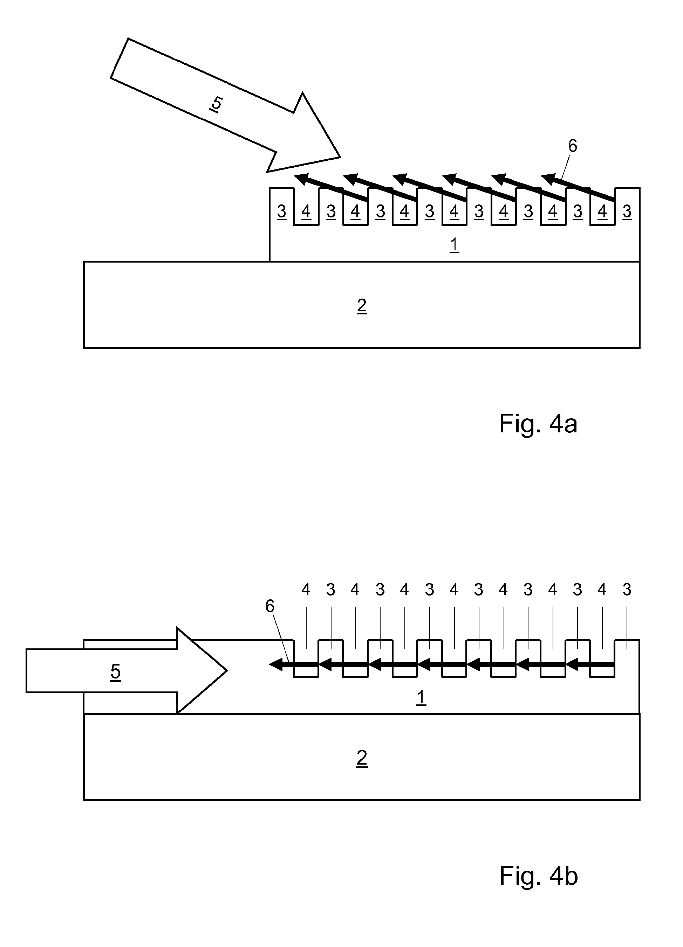

In addition to the photonic crystal, which generally acts as a probe by which the presence of an analyte can be detected, a sensor according to the invention further usually comprises a light source for providing detection light and a photodetector, for detecting light. The sensor design can be based on sensor designs know *per se, e.g.* as described in the above mentioned documents or in references cited in those documents. Figure 4 schematically shows two basic designs. In both Figure 4a and Figure 4B the sensing material 1 defines a nanostructure of alternating zones 3 (formed of the sensing material) and 4 (which can be filled with a gas or a liquid, *e.g.* the sample which is to be tested for the presence of an analyte), or with a different material, which may be permeable or impermeable to the analyte. Also if the different material is impermeable to the analye, the top surface of zones 3 will still allow interaction of the analyte-sensitive material with analyte contacted with the sensor. The sensing material is provided on an -optionally present - substrate (carrier material). Figure 4A shows a so called freespace design wherein the incoming light 5 (from a light source, not shown) may pass through a (open) space (air) and reach the sensor, reflecting light 6 may pass through the (open) space again and be detected at a distance of the analyte-sensitive material (with the naked eye or a detector, such as a photodiode or photon-multiplier tube or CCD camera, not shown). Figure 4B shows a waveguide-based system (*e.g.* optical fibre based), wherein incoming light 5 passes through a waveguide into the analyte-sensitive material 1 and through the alternating zones. Reflecting light 6 may be guided through the same or a different waveguide to be detected at a distance.

The light source or detector can be integrated with the photonic crystal, *e.g.* on a single carrier. *E.g.* an LED can be attached to the photonic crystal at the input side, which also serves as a waveguide for the light and a detection photodiode can be attached to the photonic crystal at the output side for the light. LED or detection photodiode may advantageously be an organic LED or organic photodiode respectively. Suitable methods to provide a photonic crystal with an organic LED or photodiode are known in the art. Such methods may *e.g.* be based on WO 2005/01573.

As mentioned above, the invention is further directed to a method for preparing an optical sensor

The imprintable analyte-sensitive material may in particular be a analyte-sensitive polymeric material, such as described herein above, or a precursor thereof, such as a monomer (mixture) or a prepolymer, which upon polymerisation forms the analyte-sensitive polymer. The imprintable material generally is a soft-solid material, *i.e.* a material that remains it shape in the absence of forces applied thereto (except for the generally naturally present forces such as gravity), but is deformed when the stamp is pressed on it. The skilled person will be able to formulate suitable materials on the basis of the information disclosed herein, common general knowledge, the documents cited herein, in particular WO 2009/082213, WO 2009/084954, European Application No. 10167056.0, and optionally a limited amount of testing.

Preferably an imprintable material is used that can be cured by cross-linking, once the periodic structure has been provided to the material by the imprinting the material can be hardened, in particular by crosslinking. The curing (crosslinking) may be accomplished by thermal curing or photocuring. For this, crosslinking systems known in the art for a material of choice can be used.

The stamp_may suitably be prepared by imprinting the pattern into a second imprintable material, the second material being a material for providing the stamp and - if desired - curing said second material during or after imprinting, thereby forming the stamp.

In a specific embodiment, a method according to the invention is used for preparing a photonic crystal having a 3D periodic structure. For this, the imprinting step is repeated one or more times, wherein each time a new layer of imprintable material is provided on a material that comprises the periodic structure obtained by a method according to the invention, thereafter, pressing the surface of the same or a different stamp into the new layer of imprintable material, and if desired hardening the material in which the imprint has been made.

The invention will now be illustrated by the following examples.

### Example 1: Preparation of photonic crystal sensors

A liquid formulation of silicone elastomer (RTV 615, Momentive Performance Materials) is applied to a nickel template having a periodic structure of pillars, with a pitch of ca 250 nm. The formulation is cured at 80 °C for 3 hours, cooled and removed from the nickel template. On a glass substrate an acrylic monomer formulation is applied by spin-coating. The silicone replica is pressed lightly on the thin film of liquid monomer, degassed and cured for 60 seconds using a Sadechaf UV lamp under nitrogen purge. After removal of the silicone replica, the responsive acrylate polymer photonic crystal will be used for sensor characterization.

### Example 2: Performance of the sensor measurements

The 2D acrylate photonic crystal on the glass substrate is illuminated from an angle using a broad spectrum of light. The reflected light is measured by an Ocean Optics USB4000 spectrophotometer, under the same angle. The photonic crystal is exposed to a vapour or a liquid and the change in reflection peak is monitored during exposure. This change in reflection peak wavelength, λ, is an indication for a change in refractive index or dimensions of the system, according to λ=2nΛ.

### Example 3: Monitoring of acetone

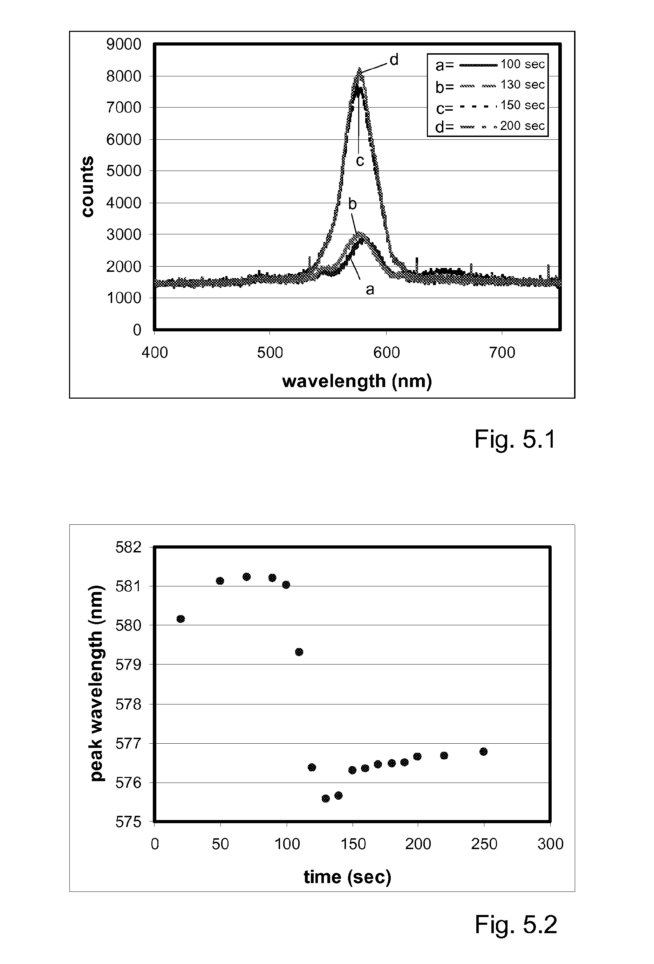

The photonic crystal is imprinted in Ebecryl 8254 (an aliphatic urethane acrylate) and liquid acetone was poured on top of the sensor. Four spectra at 100, 130, 150 and 200 seconds after immersion are shown in Figure 5.1. The development of the peak wavelength is shown in Figure 5.2.

When the liquid acetone is present on top of the nanostructure, the peak wavelength is relatively constant at 581.2 nm. During drying of the liquid acetone, the liquid is replaced by vapour/air and the effective refractive index is reduced, thus lowering the peak wavelength significantly. Finally, the acetone that is dissolved in the polymer evaporates and the effective refractive index increases again, (*n*_{acetone} = 1.36; *n*_{polymer} = 1.51) until the polymer is free of acetone. The first part of the experiment is generic for all liquid-polymer combinations and can be used to determine the refractive index of the liquid or the polymer. The second part of the experiment is specific for the combination acetone-Ebecryl, since the chemical structure of the polymer determines the sorption of the analyte.

### Example 4: Monitoring of toluene

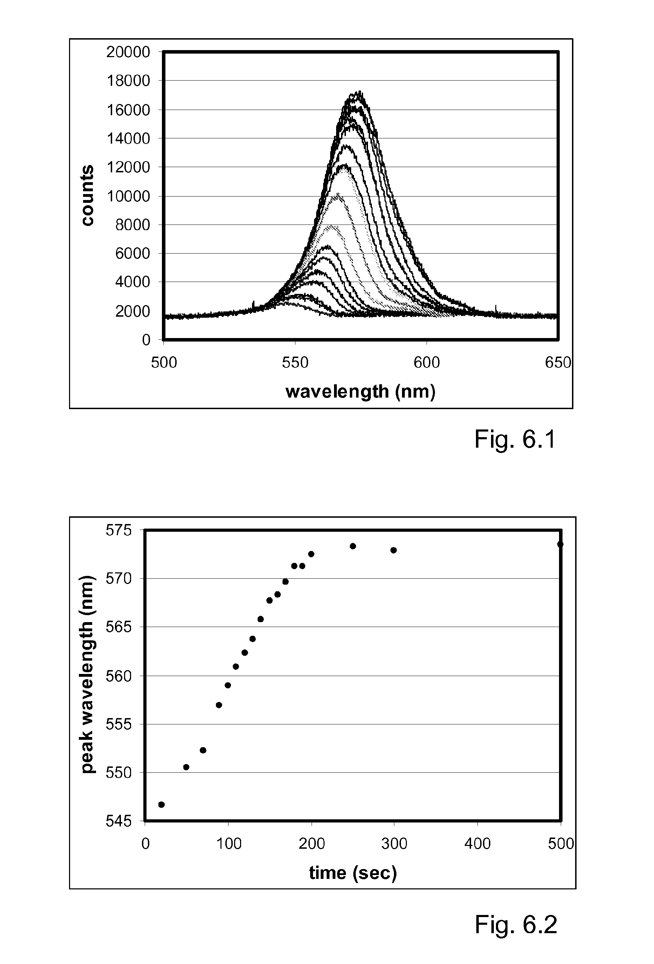

The photonic crystal is imprinted in Ebecryl 8254 (an aliphatic urethane acrylate) and liquid toluene was poured on top of the sensor. Subsequent spectra at increasing time after immersion are shown in Figure 6.1. The development of the peak wavelength is shown in Figure 6.2.

The refractive index of toluene is almost similar to that of the polymer (1.50 versus 1.51), which means that upon immersion, no refractive index contrast is present, and no reflection or diffraction can be observed. After evaporation of the liquid toluene, no change in wavelength can be observed during the evaporation of the toluene from the polymer, since the refractive indices of the two materials are similar.

### Example 5: Monitoring of water vapour

The photonic crystal is imprinted in a water sensitive acrylate formulation (54 wt% acryloyl morpholine, 36 wt% triethylene glycol dimethacrylate and 10 wt% tris[2-(acryloloxy)ethyl]isocyanurate). The nanostructred material was dried at 60 °C for 2 hours after which the exposure experiment started. A droplet of liquid water was applied in the vicinity of the photonic crystal. The shift in reflected wavelength was monitored upon absorption of the water vapour into the sensor material. The shift in reflected wavelength from dry to saturated was 0.4 nm, which indicates a change in the product *n*A of 0.06%. When water is absorbed in the polymer the refractive index decreases, but the polymer may swell and A will increase. These phenomena counteract each other, resulting in the relatively low change in wavelength. However, 0.4 nm shift is a large wavelength shift that can be measured relatively easily using the appropriate interrogators

## Claims

1. Optical sensor for detecting an analyte, the sensor comprising a photonic crystal, the photonic crystal comprising an analyte-sensitive polymeric material which material is deformable by contact with said analyte, by which contact an optical property of the photonic crystal is altered or of which material a refractive index is changed by contact with said analyte and which analyte-sensitive material forms part of a periodic structure of the photonic crystal, the structure having alternating zones of a relatively high refractive index and zones of a relatively low refractive index, which alternating zone are provided in one or two orthogonal directions of the analyte-sensitive material.

2. Optical sensor according to claim 1, wherein the material in which the periodic structure has been imprinted, is deformable by contacting it with the analyte in that it swells or shrinks when contacted with the analyte.

3. Optical sensor according to claim 1 or 2, wherein the refractive index of the material of the photonic crystal in which the periodic structure has been imprinted is changeable by contacting it with said analyte.

4. Optical sensor according to claim 1, 2 or 3, wherein the periodic structure has a triangular lattice structure, a square lattice structure or a grating structure.

5. Optical sensor according to any of the preceding claims, wherein the analyte-sensitive polymeric material is selected from the group of
- polyacrylates;
- polymers comprising a chain in which chain are present an aromatic group and a chemical group selected from the group of sulfonyl groups, carbonyl groups, carbonate groups, siloxane groups, oxygen and/or nitrogen containing heterocycle groups, such as pyridine, imidazole, oxadiazole or triazole groups, organofluorine groups, imide and amide groups;
- polymers comprising an aliphatic chain, which aliphatic chain is provided with functional, preferably polar, side-chains comprising at least one moiety selected from the group of heterocycloalkyl moieties, heterocycloaromatic moieties;
- polymers comprising crosslinks selected from the group of amide group crosslinks, ester group crosslinks, complexed metal ion crosslinks, saccharide-based crosslinks, Diels-Alder-based crosslinks, diazidostilbene-based crosslinks and diperoxide-based crosslinks;
- and molecular imprinted structures.

6. Optical sensor according to any of the preceding claims, wherein the analyte-sensitive material has a relatively high refractive index and surrounds zones with a relatively low refractive index, which zones with a relatively low refractive index preferably are formed by air or another gas.

7. Optical sensor according to any of the preceding claims, wherein the periodic structure has a periodicity in the range of 100-1500 nm , preferably in the range of 150-1000 nm, in particular in the range of 150-500 nm.

8. Optical sensor according to any of the preceding claims, wherein the alternating zones are provided in one orthogonal direction of the analyte-sensitive material.

9. Optical sensor according to any of the preceding claims, wherein the alternating zones are provided in two orthogonal directions of the analyte-sensitive material.

10. Optical sensor according to any of the preceding claims, wherein the material is deformable or changes refractive index when contacted with an analyte selected from the group of formaldehyde and other aldehydes; amines; dihydrogen sulphide, carbon disulphide and other sulphides; glucose, cortisol, bilirubin, and other biomolecules; carbon dioxide; carbon monoxide;, oxygen; carbon dioxide; hydrogen cyanide; ammonia; methane and other hydrocarbons, including aromatic hydrocarbons; methanol, ethanol and other alcohols; ionic species, including metal ions, metal-containing ions, H⁺, and hydroxyl ions; solvents; surfactants; and salts.

11. Optical sensor according to any of the preceding claims, wherein a part of the surface of the periodic structures are arranged to reflect, transmit or diffract incident light during use of the sensor, and comprises a coating having a higher refractive index than the analyte-sensitive material, which coating preferably is present on parts of the surface essentially parallel to the periodic structure of the photonic crystal.

12. Method for preparing an optical sensor, comprising a photonic crystal, for detecting an analyte, in particular an optical sensor according to any of the preceding claims, the method comprising
- providing a stamp having a surface comprising a pattern for imprinting a periodic structure for the photonic crystal;
- providing an imprintable analyte-sensitive material for the photonic crystal
- imprinting the periodic structure into the imprintable material by pressing said surface of the stamp to a surface of the imprintable material;
- optionally, hardening the material in which the periodic structure has been imprinted;
by which imprinting and optional hardening the photonic crystal is provided, wherein the material of the photonic crystal in which the periodic structure has been imprinted is deformable when contacted with said analyte, by which deformation of the material an optical property of the photonic crystal is altered, or wherein the refractive index of the material of the photonic crystal in which the periodic structure has been imprinted is changable by contact with said analyte .

13. Method according claim 11, wherein the stamp is prepared by imprinting the pattern into a second imprintable material, the second material being a material for providing the stamp and - if desired - curing said second material during or after imprinting, thereby forming the stamp,. wherein the method is preferably used for preparing a photonic crystal wherein on the period structure obtained by pressing said surface of the stamp to a surface of the imprintable material, a further layer of imprintable material is provided, into which imprintable material a periodic structure for the photonic crystal is imprinted using the same or a different stamp having a surface comprising a pattern for imprinting.

14. Use of an optical sensor according to any of the claims 1-11 or prepared by a method according to any of the claims 12-13 for detecting an analyte, in particular an analyte selected from the group of formaldehyde and other aldehydes; amines; dihydrogen sulphide, carbon disulphide and other sulphides; glucose, cortisol, bilirubin, and other biomolecules; carbon dioxide; carbon monoxide; oxygen; carbon dioxide; hydrogen cyanide; ammonia; methane and other hydrocarbons, including aromatic hydrocarbons; methanol, ethanol and other alcohols; ionic species, including metal ions, metal-containing ions, H⁺, and hydroxyl ions; solvents; surfactants; and salts

15. Use according to claim 14, for detecting an analyte under non-ambient conditions, in particular under conditions that may exist in underground oil or gas reservoirs, in the equipment that is used to produce oil or gas from these reservoirs; for detecting an analyte in a chemical reactor; for detecting an analyte in a biological sample; or for detection of an analyte in *vivo.*
